# EUROPEAN PATENT SPECIFICATION

(11) **EP 3 194 490 B1**
(45) Date of publication and mention of the grant of the patent: **31.01.2018**
(21) Application number: 15750869.8
(22) Date of filing: 29.07.2015
(51) Int. Cl.: C08L 7/00, C08L 9/00, C08L 21/00, C08L 23/22

(54) **ELASTOMERIC BLEND FOR TIRES COMPRISING HIGH GLASS TRANSITION TEMPERATURE HYDROCARBON RESINS**
ELASTOMERMISCHUNG FÜR REIFEN ENTHALTEND KOHLENWASSERSTOFFHARZE MIT HOHER GLASÜBERGANGSTEMPERATUR
COMPOSITION ELASTOMERIC POUR PNEUMATIQUES COMPRENANT DES RESINS HYDROCARBONÉES A TEMPERATURE VITREUSE ELEVÉE

(30) Priority: 17.09.2014 US 201462051484 P
(43) Date of publication of application: 26.07.2017
(73) Proprietor: ExxonMobil Chemical Patents Inc., Baytown TX 77520-2101 (US)
(72) Inventor: RODGERS, Michael, B., Cedar Park, TX 78613 (US); D'CRUZ, Bernard, Bangalore, 560036 Karnataka (IN); PAREPARAMBIL, Sajith, Bangalore Karnataka 560016 (IN); DAS, Kaushik, Bangalore Karnataka 560048 (IN)
(74) Representative: ExxonMobil Chemical Europe Inc.
(86) International application number: PCT/US2015/042693
(87) International publication number: WO 2016/043851

(56) References cited:
- US-A1- 2009 197 995
- US-A1- 2010 036 038

## Description

### CROSS REFERENCE TO PRIORITY CLAIM

This application claims priority to U.S. Application Serial No. 62/051484 filed September 17, 2014, the disclosure of which is fully incorporated herein by reference.

### FIELD OF THE INVENTION

This invention relates to elastomeric compounds incorporating a high glass transition temperature (Tg) hydrocarbon resin.

### BACKGROUND

Elastomeric compositions are used in a wide variety of applications, including tire components such as innerliners, treads, and sidewalls, hoses, belts, footwear components, and vibration isolation devices. The selection of ingredients for the commercial formulation of an elastomeric composition depends upon the balance of properties desired, the application, and the application's end use.

For example, in the tire industry the balance between processing properties of the green (uncured) composition in the tire plant and in-service performance of the cured rubber tire composite is of particular importance. The ability to improve the endurance of tires used in a wide variety of conditions, as required for agricultural tires, aircraft tires, earthmover tires, heavy-duty truck tires, mining tires, motorcycle tires, medium truck tires, and passenger car tires, while maintaining ease of processability of the uncured elastomeric composition is also of significant importance. Additionally, the goals of improving air impermeability properties, flex fatigue properties, and the adhesion of the elastomeric composition to adjoining tire components without affecting the processability of the uncured elastomeric composition or while maintaining or improving the physical property performance of the cured elastomeric composition still remain.

Conventional oil processing aids have been used in many tire components: tread compounds often contain polybutadiene rubber ("BR"), oil-extended polybutadiene rubber ("OE-BR"), styrene-butadiene rubber ("SBR"), oil-extended styrene-butadiene rubber ("OE-SBR"), isoprene-butadiene rubber ("IBR"), and styrene-isoprene-butadiene rubber ("SIBR"); sidewall and ply coats can contain butyl rubber and SBR and may use free aromatic oils as processing aids; internal components, such as the steel belt skim coat, gum strips, cushions, barriers, bases, and wedges, contain predominantly natural rubber and aromatic oils. Generally, the raw ingredients and materials used in tire compounding impact all tire performance variables, thus, any alternative to conventional processing oils, such as naphthenic, paraffinic, and aromatic oils must be compatible with the rubbers, not interfere with cure, be easily dispersed in all tire compounds, be cost effective, and not adversely impact tire performance.

As many tires are compounded and engineered for particular performance characteristics, it is desirable that any alternative for conventional processing oils maintains tire performance characteristics, such as rolling resistance, traction, and wear performance.

U.S. Publication No. 2004/0092648 discloses elastomeric compounds with a low Tg petroleum resin made from C₅ and/or C₉ monomers. U.S. Patent No. 9,062,189 discloses compositions having a low molecular weight resin made from C₅ piperlyene components for tire tread compounds. U.S. Patent No. 8,153,719 discloses rubber nanocomposites compounds with resins. However, there still remains a need for a resin that demonstrates improved durability along with improved impermeability in a cost effective manner for use in tire applications.

### SUMMARY OF THE INVENTION

The foregoing and/or other challenges are addressed by the methods and products disclosed herein.

This invention relates to an elastomeric composition comprising at least one elastomer and a hydrocarbon polymer additive, wherein the hydrocarbon polymer additive is selected from at least one of dicyclopentadiene (DCPD)-based polymer, a cyclopentadiene (CPD)-based polymer, a DCPD-styrene copolymer, a C₅ homopolymer and copolymer resin, a C₅-styrene copolymer resin, a terpene homopolymer or copolymer resin, a pinene homopolymer or copolymer resin, a C₉ homopolymer and copolymer resin, a C₅/C₉ copolymer resin, an alpha-methylstyrene homopolymer or copolymer resin, and combinations thereof; wherein the hydrocarbon polymer additive has a glass transition temperature in the range of about 40 to about 70°C; and wherein, the composition has a permeability coefficient at 40°C of about 1 cc*mm/(m²-day)*mmHg or less.

### DETAILED DESCRIPTION

Various specific embodiments of the invention will now be described, including preferred embodiments and definitions that are adopted herein for purposes of understanding the claimed invention. While the illustrative embodiments have been described with particularity, it will be understood that various other modifications will be apparent to and can be readily made by those skilled in the art without departing from the spirit and scope of the invention. For determining infringement, the scope of the "invention" will refer to any one or more of the appended claims, including their equivalents and elements or limitations that are equivalent to those that are recited.

The term "phr" means parts per hundred parts of rubber, and is a measure common in the art wherein components of a composition are measured relative to the total of all of the elastomer (rubber) components. The total phr or parts for all rubber components, whether one, two, three, or more different rubber components when present in a given recipe, is always defined as 100 phr. All other non-rubber components are ratioed against the 100 parts of rubber and are expressed in phr.

All resin component percentages listed herein are weight percentages, unless otherwise noted. "Substantially free" of a particular component in reference to a composition is defined to mean that the particular component comprises less than about 0.5 wt% or about 0.5 phr in the composition, or more preferably less than about 0.25 wt% or about 0.25 phr of the component in the composition, or most preferably less than about 0.1 wt% or about 0.1 phr of the component in the composition.

### Elastomer

The term "elastomer," as used herein, refers to any polymer or combination of polymers consistent with the ASTM D1566 definition, incorporated herein by reference. As used herein, the term "elastomer" may be used interchangeably with the term "rubber." Useful elastomers can be made by any suitable means known in the art, and the invention is not herein limited by the method of producing the elastomer.

The elastomer may be a butyl-type rubber or branched butyl-type rubber, including halogenated versions of these elastomers. Useful elastomers are unsaturated butyl rubbers such as homopolymers and copolymers of olefins, isoolefins and multiolefins. Non-limiting examples of other useful unsaturated elastomers are poly(isobutylene-*co*-isoprene), polyisoprene, polybutadiene, polyisobutylene, poly(styrene-*co*-butadiene), natural rubber, star-branched butyl rubber, and mixtures thereof. Useful elastomers include isobutylene-based homopolymers or copolymers. An isobutylene based elastomer refers to an elastomer or polymer comprising at least 70 mol% repeat units from isobutylene. These polymers can be described as random copolymers of a C₄ to C₇ isomonoolefin derived unit, such as an isobutylene derived unit, and at least one other polymerizable unit.

The elastomer may or may not be halogenated. Preferred halogenated elastomers may be selected from the group consisting of halogenated butyl rubber, bromobutyl rubber, chlorobutyl rubber, halogenated branched ("star-branched") butyl rubbers ("SBB"), and halogenated random copolymers of isobutylene and *para*-methylstyrene. Halogenation can be carried out by any means, and the invention is not herein limited by the halogenation process.

In one embodiment, the SBB is typically a composition of a butyl rubber, either halogenated or not, and a polydiene or block copolymer, either halogenated or not. In one embodiment, the SBB or halogenated-SBB is a composition of a butyl or halogenated butyl rubber and a copolymer of a polydiene and a partially hydrogenated polydiene selected from the group including styrene, polybutadiene, polyisoprene, polypiperylene, natural rubber, styrene-butadiene rubber, ethylene-propylene diene rubber ("EPDM"), ethylene-propylene rubber ("EP"), styrene-butadiene-styrene and styrene-isoprene-styrene block copolymers. These polydienes are present in one embodiment, based on the monomer wt%, greater than 0.3 wt%, or in another embodiment in the range of 0.3 to 3 wt% or in the range of 0.4 to 2.7 wt%.

The elastomer may be a random copolymer comprising a C₄ to C₇ isomonoolefin, such as isobutylene and an alkylstyrene comonomer, such as para-methylstyrene, containing at least 80%, alternatively at least 90%, by weight of the para-isomer. In one embodiment, the polymer may be a random elastomeric copolymer of ethylene or a C₃ to C₆ α-olefin and an alkylstyrene comonomer, such as para-methylstyrene containing at least 80%, alternatively at least 90%, by weight of the para-isomer.

The copolymers may optionally include functionalized interpolymers wherein at least one or more of the alkyl substituents groups present in the styrene monomer units contain a halogen or some other functional group. In one embodiment, up to 60 mol% of the para-substituted styrene present in the random polymer structure may be functionalized. In another embodiment the amount of functionalized para-methylstyrene is in the range of 0.1 to 5 mol%, or in the range of 0.2 to 3 mol%. The functional group may be halogen or some other functional group which may be incorporated by nucleophilic substitution of benzylic halogen with other groups such as carboxylic acids, carboxy salts, carboxy esters, amides and imides, hydroxyl, alkoxide, phenoxide, thiolate, thioether, xanthate, cyanide, cyanate, amino and mixtures thereof. These functionalized isomonoolefin copolymers, their method of preparation, methods of functionalization, and cure are more particularly disclosed in U.S. Patent No. 5,162,445, herein incorporated by reference.

In certain embodiments, the random copolymers have a substantially homogeneous compositional distribution such that at least 95% by weight of the polymer has a para-alkylstyrene content within 10% of the average para-alkylstyrene content of the polymer. Exemplary polymers are characterized by a narrow molecular weight distribution (Mw/Mn) of less than 5, alternatively less than 2.5, an exemplary viscosity average molecular weight in the range of 200,000 up to 2,000,000, and an exemplary number average molecular weight in the range of 25,000 to 750,000 as determined by gel permeation chromatography.

The elastomer may be a brominated poly(isobutylene-*co*-*p*-methylstyrene) ("BIMSM"). BIMSM polymers generally contain 0.1 to 5% mole of bromomethylstyrene groups relative to the total amount of monomer derived units in the copolymer. In one embodiment, the amount of bromomethyl groups is in the range of 0.2 to 3.0 mol%, or in the range of 0.3 to 2.8 mol%, or in the range of 0.4 to 2.5 mol%, or in the range of 0.3 to 2.0 mol%, wherein a desirable range may be any combination of any upper limit with any lower limit. Expressed another way, exemplary copolymers may contain 0.2 to 10 wt% of bromine, based on the weight of the polymer, or 0.4 to 6 wt% bromine, or 0.6 to 5.6 wt%, in another embodiment they are substantially free of ring halogen or halogen in the polymer backbone chain. In one embodiment, the random polymer is a copolymer of C₄ to C₇ isoolefin derived units (or isomonoolefin), para-methylstyrene derived units and para-(halomethylstyrene) derived units, wherein the para-(halomethylstyrene) units are present in the polymer in the range of 0.4 to 3.0 mol% based on the total number of para-methylstyrene, and wherein the para-methylstyrene derived units are present in the range of 3 to 15 wt% or in the range of 4 to 10 wt% based on the total weight of the polymer. In a preferred embodiment, the para-(halomethylstyrene) is para-(bromomethylstyrene).

In a further embodiment, the elastomer may be at least one non isobutylene based rubber of types conventionally used in tire rubber compounding, and herein referred to as "general purpose rubber." A general purpose rubber may be any rubber that usually provides high strength and good abrasion along with low hysteresis and high resilience.

Examples of general purpose rubbers include natural rubber ("NR"), polyisoprene rubber ("IR"), poly(styrene-*co*-butadiene) rubber ("SBR"), polybutadiene rubber ("BR"), poly(isoprene-*co*-butadiene) rubber ("IBR"), styrene-isoprene-butadiene rubber ("SIBR"), and mixtures thereof. Ethylene-propylene rubber ("EP") and ethylene-propylene-diene rubber ("EPDM"), and their mixtures are also referred to as general purpose rubbers.

In one embodiment, the elastomer may include a polybutadiene rubber ("BR"). The Mooney viscosity of the polybutadiene rubber as measured at 100°C (ML 1+4, ASTM D1646) may be in the range of about 35 to about 70, or about 40 to about 65, or in the range of about 45 to about 60 in another embodiment. Another useful general purpose rubber is high cis-polybutadiene ("cis-BR"). By "cis-polybutadiene" or "high cis-polybutadiene", it is meant that 1,4-cis polybutadiene is used, wherein the amount of cis component is at least 90%.

The elastomer may be a polyisoprene (IR) rubber. The Mooney viscosity of the polyisoprene rubber as measured at 100°C (ML 1+4, ASTM D1646) may be in the range of about 35 to about 70, or about 40 to about 65, or in another embodiment in the range of about 45 to about 60.

The elastomeric composition may comprise rubbers of ethylene and propylene derived units such as EP and EPDM as suitable secondary elastomers. Examples of suitable comonomers in making EPDM are ethylidene norbornene, 1,4-hexadiene, dicyclopentadiene, as well as others. In one embodiment, the elastomeric composition may comprise an ethylene/alpha-olefin/diene terpolymer. The alpha-olefin may be selected from the group consisting of C₃ to C₂₀ alpha-olefin with propylene, with butene and octene being preferred and propylene most preferred. The diene component may be selected from the group consisting of C₄ to C₂₀ dienes.

In one embodiment, one or more elastomers may be a natural rubber. Desirable embodiments of natural rubbers may be selected from technically specified rubbers ("TSR"), such as Malaysian rubbers which include, but are not limited to, SMR CV, SMR 5, SMR 10, SMR 20, SMR 50, and mixtures thereof. Preferred natural rubbers have a Mooney viscosity at 100°C (ML 1+4, ASTM D1646) in the range of about 30 to about 120, or in the range of about 40 to about 80.

The elastomers useful in this invention can be blended with various other rubbers or plastics, in particular thermoplastic resins such as nylons or polyolefins such as polypropylene or copolymers of polypropylene. Blends of elastomers may be reactor blends and/or melt mixes. The individual elastomer components may be present in various amounts, with the total elastomer content in the elastomeric composition being expressed as 100 phr in the formulation. These compositions are useful in air barriers such as bladders, tire innertubes, tire innerliners, air sleeves (such as in air shocks), diaphragms, as well as other applications where high air or oxygen retention is desirable.

Suitable elastomers for use in the present invention include but are not limited to Bromobutyl 2222 and Bromobutyl 2255, commercially available from ExxonMobil Chemical Company. Bromobutyl 2222 has a bromine content of about 1.8 to about 2.2 wt% and a Mooney Viscosity (ML 1 + 8 at 125°C) of about 27 to 37. Bromobutyl 2255 has a bromine content of about 1.8 to about 2.2 wt% and a Mooney Viscosity (ML 1+ 8 at 125°C) of about 41 to about 51. In an embodiment, the elastomer may be present in the composition in the amount of about 100 phr to about 150 phr.

### Hydrocarbon Polymer Additive

The elastomeric composition of the invention comprises a hydrocarbon polymer additive ("HPA"), as further described herein. The terms "resin" or "resin molecule" are interchangeable with the term "HPA" as used herein. HPAs are generally derived from petroleum streams, and may be hydrogenated or non-hydrogenated resins.

The HPA may be produced by methods generally known in the art for the production of hydrocarbon resins. The polymerization and stripping conditions may be adjusted according to the nature of the feed to obtain the desired resin.

In an embodiment, the HPA may be hydrogenated. Any known process for catalytically hydrogenating resins may be used to hydrogenate the resin. The hydrogenation of hydrocarbon resins may be carried out via molten or solution based processes by either a batchwise or, more commonly, a continuous process. Catalysts employed for the hydrogenation of HPAs are typically supported monometallic and bimetallic catalyst systems. The catalysts which may be used may include Group VIII metals such as nickel, palladium, ruthenium, rhodium, cobalt, and platinum, Group VI metals such as tungsten, chromium, and molybdenum, Group VII metals such as rhenium, manganese, and copper, other catalysts may be based on group 9, 10, or 11 elements. These metals may be used singularly or in combination of two or more metals, in the metallic form or in an activated form and may be used directly or carried on a solid support such as alumina or silica-alumina. The support material typically comprises porous inorganic refractory oxides such as silica, magnesia, silica-magnesia, zirconia, silica-zirconia, titanic silica-titania, alumina, silica-aluminun alumino-silicate, etc. Preferably, the supports are essentially free of crystalline molecular sieve materials. Mixtures of the foregoing oxides are also contemplated, especially when prepared as homogeneously as possible. Preferred supports include alumina, silica, carbon, MgO, TiO₂, ZrO₂, FeO₃, or mixtures thereof.

The HPA may be polar or non-polar. "Non-polar" means that the HPA is substantially free of monomers having polar groups. Preferably the polar groups are not present, however if they are, preferably they are not present at more than 5 wt %, preferably not more than 2 wt %, even more preferably no more than 0.5 wt %.

Preferably, the HPA has a softening point of about 80°C or more (Ring and Ball, as measured by ASTM E-28) preferably from about 80°C to about 150°C, preferably about 90°C to about 120°C, preferably about 100 to about 120°C. Preferably, the HPA has a glass transition temperature (Tg) (as measured by ASTM E 1356 using a TA Instruments model 2920 machine) of from about -30°C to about 100°C, preferably about 0°C to about 80°C, preferably about 40°C to about 70°C, preferably about 40°C to about 50°C, preferably about 50°C to about 70°C.

### Dicyclopentadiene-based HPA

The HPA may include substituted or unsubstituted units derived from cyclopentadiene homopolymer or copolymer resins (referred to as CPD), dicyclopentadiene homopolymer or copolymer resins (referred to as DCPD or (D)CPD), terpene homopolymer or copolymer resins, pinene homopolymer or copolymer resins, C₅ fraction homopolymer or copolymer resins, C₉ fraction homopolymer or copolymer resins, alpha-methylstyrene homopolymer or copolymer resins, and combinations thereof. The HPA may further include units derived from (D)CPD/vinylaromatic copolymer resins, (D)CPD/terpene copolymer resins, terpene/phenol copolymer resins, (D)CPD/pinene copolymer resins, pinene/phenol copolymer resins, (D)CPD/C₅ fraction copolymer resins, (D)CPD/C₉ fraction copolymer resins, terpene/vinylaromatic copolymer resins, terpene/phenol copolymer resins, pinene/vinylaromatic copolymer resins, pinene/phenol resins, C₅ fraction/vinylaromatic copolymer resins, and combinations thereof. The phrase "units derived from dicyclopentadiene" includes units derived from substituted DCPD such as methyl DCPD or dimethyl DCPD.

Preferably, the HPA comprises up to 100 mol% units derived from dicyclopentadiene, more preferably within the range from about 5 to about 90 mol% units derived from DCPD, most preferably from about 5 to about 70 mol% units derived from DCPD. Preferably, the HPA comprises up to about 15% piperylene components, up to about 15% isoprene components, up to about 15% amylene components, up to about 20% indene components, within the range from about 60% to about 100% cyclic components, and up to about 20% styrenic components by weight of the monomers in the monomer mix. While reference is made to a DCPD polymer, any polymer comprised of cyclic units mentioned herein is suitable for the present invention.

Cyclic components are generally a distillate cut or synthetic mixture of C₅ and C₆ to C₁₅ cyclic olefins, diolefins, and dimers, co-dimers and trimers, etc., from a distillate cut. Cyclics include, but are not limited to, cyclopentene, cyclopentadiene, DCPD, cyclohexene, 1,3-cycylohexadiene, and 1,4-cyclohexadiene. A preferred cyclic is cyclopentadiene. The DCPD may be in either the endo or exo form. The cyclics may or may not be substituted. Preferred substituted cyclics include cyclopentadienes and DCPD substituted with a C₁ to C₄₀ linear, branched, or cyclic alkyl group, preferably one or more methyl groups. Preferably, the cyclic components are selected from the group consisting of: cyclopentadiene, cyclopentadiene dimer, cyclopentadiene trimer, cyclopentadiene-C₅ co-dimer, cyclopentadiene-piperylene co-dimer, cyclopentadiene-C₄ co-dimer, cyclopentadiene-methyl cyclopentadiene co-dimer, methyl cyclopentadiene, methyl cyclopentadiene dimer, and mixtures thereof.

In some embodiments, the HPA is substantially free of piperlyene. In other embodiments, the HPA contains up to about 15 wt% piperlyene, or preferably about 5 to about 10 wt% piperlyene. In some embodiments, the HPA is substantially free of amylene. In other embodiments, the HPA contains up to about 15 wt% amylene, or preferably about 5 to about 10 wt% amylene. In some embodiments, the HPA is substantially free of isoprene. In other embodiments, the HPA contains up to about 15 wt% isoprene, or preferably about 5 to about 10 wt% isoprene. In some embodiments, the HPA is substantially free of styrene. In other embodiments, the HPA contains up to about 20 wt% styrene, or preferably about 5 to about 15 wt% styrene. In some embodiments, the HPA is substantially free of indene. In other embodiments, the HPA contains up to about 20 wt% indene, or preferably about 5 to about 15 wt% indene. In one embodiment the HPA may include up to about 60 wt% cyclics or up to about 50 wt% cyclics. In some embodiments, the HPA includes cyclics in an amount in the range of about 0.1 wt% to about 50 wt%, or about 0.5 wt% to about 30 wt% cyclics, or about 1.0 wt% to about 20 wt% cyclics are included. In other embodiments, the HPA comprises from about 5 wt% to about 15 wt% cyclics.

Preferably, the HPA has a refractive index greater than 1.5. Preferably, the HPA has a softening point of about 80°C or more (Ring and Ball, as measured by ASTM E-28) preferably from about 80°C to about 150°C, preferably about 90°C to about 120°C, preferably about 100 to about 120°C, preferably about 102°C. Preferably, the HPA has a glass transition temperature (Tg) (as measured by ASTM E 1356 using a TA Instruments model 2920 machine) of from about -30°C to about 100°C, preferably about 0°C to about 80°C, preferably about 50°C to about 70°C, preferably 55°C. Preferably, the HPA comprises olefinic unsaturation, e.g., at least 1 mol% olefinic hydrogen, based on the total moles of hydrogen in the interpolymer as determined by ¹H-NMR. Alternatively, the HPA comprises from 1 to 20 mol% aromatic hydrogen, preferably from 2 to 15 mol% aromatic hydrogen, more preferably from 2 to 10 mol% aromatic hydrogen, preferably 9 mol% aromatic hydrogen, based on the total moles of hydrogen in the polymer. In other embodiments, the HPAs have a weight average molecular weight (Mw) greater than about 600 g/mole. In at least one embodiment, HPAs have a Mw in the range of about 600 to about 1000 g/mole, preferably about 700 to about 900 g/mole, preferably about 800 g/mole. The HPA may have a number average molecular weight (Mn) in the range of about 300 to about 700 g/mole, preferably about 400 to about 600 g/mole, preferably about 500 g/mole. In one embodiment the HPA has a polydispersion index ("PDI", PDI = Mw/Mn) of about 4 or less, preferably the HPA has a PDI in the range of about 1.4 to about 1.8.

In one embodiment, the HPA may be prepared by thermal polymerization. For example, the resin may be thermally polymerized from a feed containing cyclopentadiene in a benzene or toluene solvent for 2.0 to 4.0 hours at 220°C to 280°C and about 14 bars pressure (1.4 MPa), with conditions being adjusted to control the molecular weight and softening point of the resin. The feed may further contain alkyl cyclopentadienes, dimers and codimers of cyclopentadiene and methylcyclopentadiene, and other acyclic dienes such as 1,3-piperylene and isoprene. Other copolymerizable unsaturated monomers such as vinyl aromatics such as styrene, α-methylstyrene, indene, and vinyl toluene may also be present.

A suitable DCPD-based HPA for use in the present invention is Oppera™383 resin, commercially available from ExxonMobil Chemical Company. Oppera™383 is an aromatic modified, cycloaliphatic hydrocarbon resin, having a softening point of about 102.5°C, a Mw of about 800 g/mole and a Mn of about 500 g/mole, a Tg of about 55°C, and an aromaticity of about 9.8% aromatic protons.

### Piperlyene-based HPA

In another embodiment, the HPA may be catalytically polymerized. A preferred method for production of the resins is combining the feed stream in a polymerization reactor with a Friedel-Crafts or Lewis Acid catalyst at a temperature in the range of 0°C and 200°C, preferably in the range of 20°C and 80°C. Friedel-Crafts polymerization is generally accomplished by use of known catalysts in a polymerization solvent, and removal of solvent and catalyst by washing and distillation. The polymerization process may be in a batchwise or continuous mode, continuous polymerization may be in a single stage or in multiple stages. The Friedel-Crafts catalysts that may be used include, but are not limited to, Lewis Acids such as boron triflouride (BF3), complexes of boron triflouride, aluminum trichloride (AlCl3), or alkylaluminum halides, particularly chloride. In an embodiment, the amount of Lewis Acid that may be used in the catalyst is in the range of 0.3 to 3.0 wt%, based upon the weight of the feed blend, preferably 0.5 to 1.0 wt%. The aluminum trichloride catalyst is preferably used as a powder.

In one embodiment, the HPA comprises about 40 to about 90 wt% piperylene, or from about 50 to about 90 wt%, or more preferably from about 60 to about 90 wt%. In another embodiment, the HPA comprises from about 70 to about 90 wt% piperylene. In some embodiments, the HPA is substantially free of isoprene. In other embodiments, the HPA contains up to about 5 wt% isoprene, or more preferably up to about 10 wt% isoprene. In yet another embodiment, the HPA contains up to about 15 wt% isoprene. In some embodiments, the HPA is substantially free of amylene. In other embodiments, the HPA contains up to about 10 wt% amylene, or up to about 25 wt% amylene, or up to about 30 wt% amylene. In yet another embodiment, the HPA contains up to about 40 wt% amylene. In some embodiments, aromatic olefins are typically present in the HPA from about 5 to about 45 wt%, or more preferably from about 5 to about 30 wt%. In preferred embodiments, the HPA comprises from about 10 to about 20 wt% aromatic olefins. In one embodiment, the HPA comprises up to about 60 wt% styrenic components or up to about 50 wt% styrenic components. In one embodiment, the HPA comprises from about 5 to about 30 wt% styrenic components, or from about 5 to about 20 wt% styrenic components. In a preferred embodiment, the HPA comprises from about 10 to about 15 wt% styrenic components. In another embodiment, the HPA may include up to about 15 wt% indenic components, or up to about 10 wt% indenic components. Indenic components include indene and derivatives of indene. In one embodiment, the HPA comprises up to about 5 wt% indenic components. In another embodiment, the HPA is substantially free of indenic components.

Preferably, the HPA has a softening point of about 80°C or more (Ring and Ball, as measured by ASTM E-28) preferably from about 80°C to about 120°C, preferably about 80°C to about 100°C, preferably about 93°C. Preferably, the HPA has a glass transition temperature (Tg) (as measured by ASTM E 1356 using a TA Instruments model 2920 machine) of from about -30°C to about 100°C, preferably about 0°C to about 80°C, preferably about 40°C to about 50°C, preferably about 45°C. Preferably, the HPA comprises olefinic unsaturation, e.g., at least 1 mol% olefinic hydrogen, based on the total moles of hydrogen in the interpolymer as determined by ¹H-NMR. Alternatively, the HPA comprises from about 1 to about 10 mol% aromatic hydrogen, preferably from about 2 to about 8 mol% aromatic hydrogen, preferably about 3.5 mol% aromatic hydrogen, based on the total moles of hydrogen in the polymer. In other embodiments, the HPAs have a weight average molecular weight (Mw) greater than about 1000 g/mole. In at least one embodiment, HPAs have a Mw in the range of about 1000 to about 3000 g/mole, preferably about 1500 to about 2500 g/mole, preferably about 2200 g/mole. The HPA may have a number average molecular weight (Mn) in the range of about 500 to 1500 g/mole, preferably about 800 to about 1200 g/mole, preferably about 1100 g/mole. In one embodiment the HPA has a polydispersion index ("PDI", PDI = Mw/Mn) of about 4 or less, preferably the HPA has a PDI in the range of about 1.8 to about 2.2.

A suitable piperlyene-based HPA for use in the present invention is Escorez™2203LC resin, commercially available from ExxonMobil Chemical Company. Escorez™2203LC is an aromatic modified aliphatic hydrocarbon resin with a narrow molecular weight distribution, having a softening point of about 92.6°C, a Mw of about 2200 g/mole and a Mn of about 1100 g/mole, a Tg of about 45°C, and an aromaticity of about 3.4 % aromatic protons.

### Additives

The elastomeric compositions of the invention can include various additives with the one or more elastomers and the one or more HPAs. Suitable additives include, but are not limited to, fillers, coupling agents, plasticizers, and antioxidants.

### Filler

The term "filler" as used herein refers to any material that is used to reinforce or modify physical properties, impart certain processing properties, or reduce cost of an elastomeric composition.

Examples of fillers suitable for the present invention include, but are not limited to, calcium carbonate, clay, mica, silica, silicates, talc, titanium dioxide, alumina, zinc oxide, starch, wood flour, carbon black, or mixtures thereof. The fillers may be any size and typically range, for example in the tire industry, from 0.0001 µm to 100 µm. A preferred filler for the present invention is ASTM grade N660 carbon black.

### Coupling Agent

As used herein, the term "coupling agent" is meant to refer to any agent capable of facilitating stable chemical and/or physical interaction between two otherwise non-interacting species, e.g., between a filler and an elastomer. Coupling agents cause filler to have a reinforcing effect on the rubber. Such coupling agents may be premixed, or pre-reacted, with the filler particles or added to the rubber mix during the rubber/filler processing, or mixing, stage. If the coupling agent and filler are added separately to the rubber mix during the rubber/silica mixing, or processing stage, it is considered that the coupling agent then combines in situ with the filler.

The coupling agent may be a sulfur-based coupling agent, an organic peroxide-based coupling agent, an inorganic coupling agent, a polyamine coupling agent, a resin coupling agent, a sulfur compound-based coupling agent, oxime-nitrosamine-based coupling agent, and sulfur. Among these, preferred for a rubber composition for tires is the sulfur-based coupling agent.

### Plasticizer

As used herein, the term "plasticizer" (also referred to as a processing oil), refers to a petroleum derived processing oil and synthetic plasticizer. Such oils are primarily used to improve the processability of the composition. Suitable plasticizers include, but are not limited to, aliphatic acid esters or hydrocarbon plasticizer oils such as paraffinic oils, aromatic oils, naphthenic petroleum oils, and polybutene oils. In some embodiments, the elastomeric composition may contain naphthenic oil. In other preferred embodiments, the elastomeric composition is substantially free of naphthenic oil. Generally, naphthenic oils have a viscosity gravity constant of about 0.85 as described in ASTM D2501, a Tg of about -60°C, and a nominal aniline point of about 90 as described in ASTM D611.

### Antioxidant

As used herein, the term "antioxidant" refers to a chemical that combats oxidative degradation. Suitable antioxidants include diphenyl-p-phenylenediamine and those disclosed in The Vanderbilt Rubber Handbook (1978), pages 344 to 346.

### Crosslinking Agents, Curatives, Cure Packages, and Curing Processes

The elastomeric compositions and the articles made from those compositions are generally manufactured with the aid of at least one cure package, at least one curative, at least one crosslinking agent, and/or undergo a process to cure the elastomeric composition. As used herein, a curative package refers to any material or method capable of imparting cured properties to a rubber as is commonly understood in the industry. Suitable curatives for use in the present invention include but are not limited to stearic acid, zinc oxide, 2-Mercaptobenzothiazole disulfide (MBTS), and sulfur.

### Processing: Preparation of Tire Innerliner Composition

The inventive tire innerliner composition may be compounded (mixed) by any conventional means known to those skilled in the art. The mixing may occur in a single step or in multiple stages. For example, the ingredients are typically mixed in at least two stages, namely at least one non-productive stage followed by a productive mixing stage. The terms "non-productive" and "productive" mix stages are well known to those having skill in the rubber mixing art. The elastomer, HPA, filler and any other non-reactive additives, are generally mixed in one or more non-productive mix stages. Most preferably, the elastomer and the HPA are mixed first at 110°C to 130°C for 30 seconds to 2 minutes, followed by addition of the filler and other non-reactive additives, the combination of which is further mixed, most preferably at an increasing temperature up to 140°C to 160°C for 30 seconds to 3 or 4 minutes. Most desirably the filler is mixed in portions, most preferably one half, then the second half. The curatives (stearic acid, zinc oxide, MBTS, and sulfur) are typically mixed in the productive mix stage. In the productive mix stage, the mixing typically occurs at a temperature, or ultimate temperature, lower than the mix temperature(s) of the preceding nonproductive mix stage(s).

The elastomer useful in the invention can be blended with various other rubbers or plastics as disclosed herein, in particular thermoplastic resins such as nylons or polyolefins such as polypropylene or copolymers of polypropylene. These compositions are useful in air barriers such as tire innerliners, bladders, tire innertubes, air sleeves (such as in air shocks), diaphragms, as well as other applications where high air or oxygen retention is desirable. In one embodiment, the cured composition has an oxygen permeation coefficient at 40°C of about 220 cc*mm/[m²-day] or less, or about 200 cc*mm/[m²-day] or less, about 160 cc*mm/[m²-day] or less, or about 140 cc*mm/[m²-day] or less, or about 120 cc*mm/[m²-day] or less, or about 100 cc*mm/[m²-day] or less. In preferred embodiments, the cured elastomeric composition has a permeation coefficient at 40°C of about 90 cc*mm/[m²-day] or less, or about 80 cc*mm/[m²-day] or less, or about 75 cc*mm/[m²-day] or less, or about 70 cc*mm/[m²-day] or less. In one embodiment, the cured composition has an oxygen permeability coefficient at 40°C of about 1 cc*mm/[m²-day]*mmHg or less, or about 0.5 cc*mm/[m²-day]*mmHg or less, about 0.1 cc*mm/[m²-day]*mmHg or less, about 0.08 cc*mm/[m²-day]*mmHg or less.

In model tire innerliner compounds, the elastomeric composition may comprise: 100 phr of elastomer(s); about 5 to about 50 phr of HPA(s) as described herein; optionally, about 50 to about 90 phr of fillers, such as for example, carbon black; optionally, about 4 to about 15 phr of clay(s); optionally, about 0.5 to about 5 phr of zinc oxide; optionally, about 1 to about 5 phr of stearic acid; optionally, about 0.25 to about 1.50 phr of sulfur; and optionally, about 5 phr of a plasticizer.

### Test Methods

Mw, Mn, and PDI of the HPAs used in the examples of the invention were determined by gel permeation chromatography (GPC) as follows. A Tosoh EcoSEC HLC-8320 GPC system equipped with enclosed Differential Refractive Index (RI) and Ultraviolet (UV) detectors was used with 3 separation columns in the following order: PLgel 5µm Mixed-D, 300 x 7.5mm, PLgel 5µ 10³ Ä, 300 x 7.5mm, PLgel 5µ 500 Ä, 300 x 7.5mm & PLgel 5µ 50 Ä, 300 x 7.5mm. Tetrahydrofuran (THF) was used as an eluent at a flow rate of 1.0 mL/min at room temperature (range of about 20°C to about 23.5°C). The GPC samples are prepared by dissolving 24mg (+/-0.2mg) of each material in 9mL of THF. 0.5µL of Toluene was used as a flow marker. Mw and PDI data were calculated based on RI calibration with EcoSEC software, prepared using narrow Mw polystyrene standards.

Curing characteristics were measured at 16⁰°C based on ASTM D5289. "MH" and "ML" used herein refer to "maximum torque" and "minimum torque," respectively. "Curing Torque" used herein refers to the difference between MH and ML. Mooney Viscosity was measured at 10⁰°C and Mooney Scorch was measured at 12⁵°C, based on ASTM D1646. Peel Adhesion was measured using a Tensile Testing Machine known in the art. Oxygen permeability was measured using a Mocon OX-TRAN 2/61 permeability tester at 60°C. Mechanical Properties, including Modulus at 100% and 300%, Tensile Strength, Elongation at Break, and Shore A Hardness were measured based on ASTM D412. Fatigue to Failure was measured based on ASTM D4482, with the aging conditions set at 12⁵°C and 72 hours.

### EXAMPLES

The comparative and inventive tire innerliner compositions, as provided in Tables 1-4, were prepared by first mixing a HPA with an elastomer, filler (carbon black), and optionally one or more plasticizers (naphthenic oil and/or processing aid) in a 1.5 liter tangential mixer. The first mixing step is referred to herein as "first pass". The comparative compositions contain no HPA, whereas the inventive contain either Escorez™2203LC (a piperlyene-based resin molecule) or Oppera™383 (a DCPD-based resin molecule). The resulting blend was cooled and then blended using the same 1.5 liter tangential mixer with curatives in the amounts shown below. This second pass mixing was performed as follows: 1) mixer rotor speed was set at 35 RPM, temperature at 70°C; 2) add blend from first pass and mix for 30 seconds; 3) add curatives and mix for six minutes and 30 seconds; and 4) remove batch for a total mixing time of seven minutes from the addition of the blend from the first pass.

Table 1 shows three innerliner compositions, having the same amount and type of elastomer, filler, plasticizer, and cure package. Comparative composition C1 does not contain any HPA. Inventive composition E1A contains 5 phr of HPA Escorez™2203LC and Inventive composition E1B contains 5 phr of HPA Oppera™383.

**TABLE 1**

| | **C1** | **E1A** | **E1B** |
|---|---|---|---|
| Halogenated Rubber (Elastomer), *Bromobutyl 2255* | 100 | 100 | 100 |
| Carbon Black N 660 | 60 | 60 | 60 |
| Naphthenic oil | 8 | 8 | 8 |
| Hydrocarbon Polymer Additive | None | 5 (Escorez™2203LC) | 5 (Oppera™ 383) |

| **CURE PACKAGE** | | | |
|---|---|---|---|
| Stearic Acid | 1 | 1 | 1 |
| Zinc Oxide | 1 | 1 | 1 |
| MBTS | 1.25 | 1.25 | 1.25 |
| Sulfur | 0.5 | 0.5 | 0.5 |
| TOTAL (phr) | 171.75 | 176.75 | 176.75 |

Table 2 shows the results of testing the three innerliner compositions of Table 1. The addition of 5 phr of HPA (in compositions E1A and E1B) favorably reduces the innerliner Mooney Viscosity and Curing Torque, increases the Adhesion of the innerliner compound to the tire carcass (as measured by Peel Strength), increases the retention of aged Elongation at Break, increases the retention of aged Fatigue Life of the tire innerliner, and reduces the Permeability of oxygen.

The selection of the type of HPA in the innerliner compound - whether a high Tg DCPD-type HPA such as Oppera™383 or a high Tg piperlyene-type HPA such as Escorez™2203LC - effects the properties of the resulting innerliner. As Table 2 shows, E1A displayed more favorable Mooney Viscosity, Curing Torque, Elongation at Break, aged Fatigue life, and oxygen impermeability than E1B. Likewise, E1B displayed more favorable adhesion properties than E1A without compromising curing and mechanical properties over the comparative C 1.

**TABLE 2**

| | **C1** | **E1A** | **E1B** |
|---|---|---|---|
| **MOONEY PROPERTIES** | | | |
| Mooney Viscosity, ML (1+4) at 100°C | 69 | 61 | 64 |
| Mooney Scorch at 125°C, min | 32.3 | 32.9 | 30.7 |

| **CURING PROPERTIES** | | | |
|---|---|---|---|
| ML Torque, dNm | 2.34 | 1.94 | 2.15 |
| MH Torque, dNm | 7.37 | 6.15 | 6.7 |
| Curing Torque, dNm | 5.03 | 4.21 | 4.55 |
| Scorch time, min | 4.25 | 4.70 | 4.37 |
| Curing time, min | 7.84 | 7.90 | 7.74 |

| **ADHESION PROPERTIES** | | | |
|---|---|---|---|
| Peel Strength, kgf/cm | 3.54 | 5.27 | 18.81 |

| **MECHANICAL PROPERTIES** | | | |
|---|---|---|---|
| 100 % Modulus, MPa | 1.5 | 1.2 | 1.8 |
| 300 % Modulus, MPa | 6.8 | 5.6 | 7.8 |
| Tensile Strength, MPa | 11.5 | 10.7 | 11.4 |
| Elongation at Break, % | 540 | 550 | 490 |
| Shore A Hardness | 46 | 40 | 45 |

| **MECHANICAL PROPERTIES, AGED** | | | |
|---|---|---|---|
| 100 % Modulus, MPa | 2.5 | 2.1 | 3.0 |
| Tensile Strength, MPa | 10.0 | 8.5 | 9.7 |
| Elongation at Break, % | 350 | 400 | 350 |
| Shore A Hardness | 58 | 53 | 56 |
| Aged Fatigue to Failure, kC | 7.9 | 11.0 | 8.9 |

| **OXYGEN PERMEABILITY** | | | |
|---|---|---|---|
| Permeability Coefficient, [cc*mm/(m²-day)*mmHg] | 0.295 | 0.293 | 0.277 |

Table 3 shows two innerliner compositions - inventive E2 and comparative C2 - having the same amount and type of elastomer and cure package. E2 contains a reduced amount of filler and naphthenic oil as compared to C2 and instead contains 10 phr of a piperlyene-based HPA. As a result of adding a HPA in E2, all properties (curing, mechanical, adhesion, and permeability) of the resultant innerliner formulation were favorable as compared to C2.

**TABLE 3**

| | **C2** | **E2** |
|---|---|---|
| Halogenated Rubber (Elastomer), *Bromobutyl 2255* | 100 | 100 |
| Carbon Black N 660 | 60 | 50 |
| Naphthenic oil | 8 | 2 |
| Hydrocarbon Polymer Additive, *Escorez*™*2203LC* | 0 | 10 |

| **CURE PACKAGE** | | |
|---|---|---|
| Stearic Acid | 1 | 1 |
| Zinc Oxide | 1 | 1 |
| MBTS | 1.25 | 1.25 |
| Sulfur | 0.5 | 0.5 |

| **PROPERTIES** | | |
|---|---|---|
| Mooney Viscosity, ML (1+4) at 100°C [MU] | 69 | 64 |
| Curing Torque at 160°C, [dNm] | 5.0 | 3.5 |
| Curing Time, [min] | 7.8 | 7.7 |
| 100 % Modulus, [MPa] | 1.5 | 1.1 |
| Elongation at Break, [%] | 540 | 660 |
| Aged Fatigue to Faillure, [kC] | 8 | 51 |
| Peel Strength, [kgf/cm] | 3.5 | 6.7 |
| Permeability Coefficient, [cc*mm/(m²-day)*mmHg] | 0.295 | 0.237 |

Table 4 shows two innerliner compositions - inventive E3 and comparative C3 - having the same amount and type of elastomer and cure package. E3 contains a reduced amount of filler and plasticizer (naphthenic oil and processing aid) as compared to C3 and instead contains 10 phr of a DCPD-based HPA. As a result of adding a HPA in E3, all properties (curing, mechanical, adhesion, and permeability) of the resultant innerliner formulation were favorable as compared to C3.

**TABLE 4**

| | **C3** | **E3** |
|---|---|---|
| Halogenated Rubber (Elastomer), *Bromobutyl* 2222 | 100 | 100 |
| Carbon Black N 660 | 60 | 50 |
| Naphthenic oil | 8 | 0 |
| Processing Aid | 7 | 8 |
| Hydrocarbon Polymer Additive, *Oppera*™*383* | 0 | 10 |

| **CURE PACKAGE** | | |
|---|---|---|
| Stearic Acid | 1 | 1 |
| Zinc Oxide | 1 | 1 |
| MBTS | 1.25 | 1.25 |
| Sulfur | 0.5 | 0.5 |

| **PROPERTIES** | | |
|---|---|---|
| Mooney Viscosity, ML (1+4) at 100°C [MU] | 59 | 57 |
| Curing Torque at 160°C, [dNm] | 5.1 | 3.6 |
| Curing Time, [min] | 12.2 | 11.7 |
| 100 % Modulus, [MPa] | 1.2 | 0.8 |
| Elongation at Break, [%] | 700 | 960 |
| Aged Fatigue to Failure, [kC] | 44 | |
| Peel Strength, [kgf/cm] | 19.7 | 20.2 |
| Permeability Coefficient, [cc*mm/(m2-day)*mmHg] | 0.286 | 0.196 |

### INDUSTRIAL APPLICABILITY

The compositions of the invention may be extruded, compression molded, blow molded, injection molded, and laminated into various shaped articles including fibers, films, laminates, layers, industrial parts such as automotive parts, appliance housings, consumer products, packaging, and the like.

In particular, the compositions comprising the resin are useful in components for a variety of tire applications such as truck tires, bus tires, automobile tires, motorcycle tires, off-road tires, aircraft tires, and the like. Such tires can be built, shaped, molded, and cured by various methods which are known and will be readily apparent to those having skill in the art. The compositions may be fabricated into a component of a finished article for a tire. The component may be any tire component such as innerliners, treads, sidewalls, chafer strips, tire gum layers, reinforcing cord coating materials, cushion layers, and the like. The composition may be particularly useful in a tire innerliner.

The compositions comprising the resin of the present invention are useful in a variety of applications, particularly tire curing bladders, inner tubes, air sleeves, hoses, belts such as conveyor belts or automotive belts, solid tires, footwear components, rollers for graphic arts applications, vibration isolation devices, pharmaceutical devices, adhesives, caulks, sealants, glazing compounds, protective coatings, air cushions, pneumatic springs, air bellows, accumulator bags, and various bladders for fluid retention and curing processes. They are also useful as plasticizers in rubber formulations; as components to compositions that are manufactured into stretch-wrap films; as dispersants for lubricants; and in potting and electrical cable filling and cable housing materials.

The compositions comprising the resin may also be useful in molded rubber parts and may find wide applications in automobile suspension bumpers, auto exhaust hangers, and body mounts. In yet other applications, compositions of the invention are also useful in medical applications such as pharmaceutical stoppers and closures and coatings for medical devices.

The elastomeric compositions of this invention are particularly suitable for tire innerliners and innertubes and other materials requiring good air retention. A tire innerliner with improved impermeability can allow for maintenance of correct inflation pressure; reduction in tire rolling resistance thus reducing fuel consumption due to the better inflation pressure retention; longer tire life due to better tire tread footprints and more even-wear performance; and smoother steering response due to better inflation pressure retention.

Certain embodiments and features have been described using a set of numerical upper limits and a set of numerical lower limits. It should be appreciated that ranges from any lower limit to any upper limit are contemplated unless otherwise indicated. Certain lower limits, upper limits, and ranges appear in one or more claims below. All numerical values are "about" or "approximately" the indicated value, and take into account experimental error and variations that would be expected by a person having ordinary skill in the art.

To the extent a term used in a claim is not defined above, it should be given the broadest definition persons in the pertinent art have given that term as reflected in at least one printed publication or issued patent. Furthermore, all patents, test procedures, and other documents cited in this application are fully incorporated by reference to the extent such disclosure is not inconsistent with this application and for all jurisdictions in which such incorporation is permitted.

## Claims

1. An elastomeric composition comprising:
a) at least one elastomer; and
b) a hydrocarbon polymer additive, wherein the hydrocarbon polymer additive is selected from at least one of dicyclopentadiene (DCPD)-based polymer, a cyclopentadiene (CPD)-based polymer, a DCPD-styrene copolymer, a C₅ homopolymer and copolymer resin, a C₅-styrene copolymer resin, a terpene homopolymer or copolymer resin, a pinene homopolymer or copolymer resin, a C₉ homopolymer and copolymer resin, a C₅/C₉ copolymer resin, an alpha-methylstyrene homopolymer or copolymer resin, and combinations thereof;
wherein the hydrocarbon polymer additive has a glass transition temperature in the range of 40 to 70°C; and
wherein, the composition has a permeability coefficient at 40°C of 1.0 cc*mm/(m²-day)*mmHg or less.

2. The composition of claim 1, wherein the hydrocarbon polymer additive has a weight average molecular weight of from 700 g/mole to 2500 g/mole.

3. The composition of claim 1, wherein the hydrocarbon polymer additive has a glass transition temperature in the range of 50 to 70°C and/or a softening point in the range of 100 to 120°C.

4. The composition of claim 3, wherein the hydrocarbon polymer additive comprises:
a) within the range from 60 to 100 wt% cyclic components;
b) less than or equal to 15 wt% components derived from piperylene;
c) less than or equal to 15 wt% components derived from amylene;
d) less than or equal to 15 wt% components derived from isoprene;
e) less than or equal to 20 wt% components derived from styrene; and
f) less than or equal to 20 wt% components derived from indene;
wherein the total components equals 100 wt%.

5. The composition of any one of claims 3-4, wherein the hydrocarbon polymer additive has a weight average molecular weight of from 700 g/mole to 900 g/mole.

6. The composition of claim 1, wherein the hydrocarbon polymer additive has a glass transition temperature in the range of 40 to 50°C and a softening point in the range of 90 to 100°C.

7. The composition of claim 6, wherein the hydrocarbon polymer additive comprises:
g) within the range from 40 to 90 wt% components derived from piperylene;
h) less than or equal to 40 wt% components derived from amylene;
i) less than or equal to 15 wt% components derived from isoprene;
j) less than or equal to 20 wt% components derived from styrene; and
k) less than or equal to 15 wt% components derived from indene;
wherein the total components equals 100 wt%.

8. The composition as claimed in any one of claims 1-7, wherein the at least one elastomer is selected from at least one of butyl rubber, halogenated butyl rubber, branched ("star-branched") butyl rubber, halogenated star-branched butyl rubber, poly(isobutylene-*cop*-methylstyrene), halogenated poly(isobutylene-*co-p*-methylstyrene), general purpose rubber, natural rubber, polybutadiene rubber, polyisoprene rubber, styrene-butadiene rubber, styrene-isoprene-butadiene rubber, isoprene-butadiene rubber, high cis-polybutadiene, ethylene-propylene rubber, ethylene-propylene-diene rubber, nitrile rubber, brominated butyl rubber, chlorinated butyl rubber, star-branched polyisobutylene rubber, and mixtures thereof.

9. The composition as claimed in any one of claims 1-8, wherein the hydrocarbon polymer additive is present from 5 to 50 phr based on the elastomeric composition.

10. The composition as claimed in any one of claims 1-9, further comprising one or more filler components selected from calcium carbonate, clay, mica, silica, silicates, talc, titanium dioxide, starch and other organic fillers selected from wood flour, carbon black, and mixtures thereof.

11. The composition as claimed in any one of claims 1-10, wherein the elastomeric composition is cured.

12. The composition as claimed in any one of claims 1-11, wherein the composition is substantially free of naphthenic oils and paraffinic oils.

13. The composition as claimed in any one of claims 1-12, wherein the composition is substantially free of a plasticizer.

14. An air barrier, a tire innerliner, an innertube, or a hose comprising the composition as claimed in any one of claims 1-13.

15. A process to prepare an elastomeric composition according to claim 1, comprising combining
a) at least one elastomer; and
b) a hydrocarbon polymer additive, wherein the hydrocarbon polymer additive is selected from at least one of dicyclopentadiene (DCPD)-based polymer, a cyclopentadiene (CPD)-based polymer, a DCPD-styrene copolymer, a C₅ homopolymer and copolymer resin, a C₅-styrene copolymer resin, a terpene homopolymer or copolymer resin, a pinene homopolymer or copolymer resin, a C₉ homopolymer and copolymer resin, a C₅/C₉ copolymer resin, an alpha-methylstyrene homopolymer or copolymer resin, and combinations thereof;
wherein the hydrocarbon polymer additive has a glass transition temperature in the range of 40 to 70°C; and
wherein, the composition has a permeability coefficient at 40°C of 1.0 cc*mm/(m²-day)*mmHg or less.

## Patentansprüche

1. Elastomerzusammensetzung, die
a) mindestens ein Elastomer und
b) ein Kohlenwasserstoffpolymeradditiv umfasst, wobei das Kohlenwasserstoffpolymeradditiv ausgewählt ist aus mindestens einem von einem Polymer auf Basis von Dicyclopentadien (DCPD), einem Polymer auf Basis von Cyclopentadien (CPD), einem DCPD-Styrol-Copolymer, einem C₅-Homopolymer- und Copolymer-Harz, einem C₅-Styrol-Copolymer-Harz, einem Terpen-Homopolymer- oder Copolymer-Harz, einem Pinen-Homopolymer- oder Copolymer-Harz, einem C₉-Homopolymer- und Copolymer-Harz, einem C₅/C₉-Copolymer-Harz, einem α-Methylstyrol-Homopolmyer- oder Copolymer-Harz und Kombinationen davon,
wobei das Kohlenwasserstoffpolymeradditiv eine Glasübergangstemperatur im Bereich von 40 bis 70 °C aufweist, und
wobei die Zusammensetzung einen Permeabilitätskoeffizienten bei 40 °C von 1,0 cc*mm/(m²-Tag)*mmHg oder weniger aufweist.

2. Zusammensetzung nach Anspruch 1, bei der das Kohlenwasserstoffpolymeradditiv ein gewichtsmittleres Molekulargewicht von 700 g/mol bis 2500 g/mol aufweist.

3. Zusammensetzung nach Anspruch 1, bei der das Kohlenwasserstoffpolymeradditiv eine Glasübergangstemperatur im Bereich von 50 bis 70 °C und/oder einen Erweichungspunkt im Bereich von 100 bis 120 °C aufweist.

4. Zusammensetzung nach Anspruch 3, bei der das Kohlenwasserstoffpolymeradditiv
a) innerhalb des Bereichs von 60 bis 100 Gew.-% cyclische Komponenten,
b) weniger als oder gleich 15 Gew.-% von Komponenten abgeleitet von Piperylen,
c) weniger als oder gleich 15 Gew.-% von Komponenten abgeleitet von Amylen,
d) weniger als oder gleich 15 Gew.-% von Komponenten abgeleitet von Isopren,
e) weniger als oder gleich 20 Gew.-% von Komponenten abgeleitet von Styrol, und
f) weniger als oder gleich 20 Gew.-% von Komponenten abgeleitet von Inden
umfasst, wobei die gesamten Komponenten 100 Gew.-% erreichen.

5. Zusammensetzung nach einem der Ansprüche 3 bis 4, bei der das Kohlenwasserstoffpolymeradditiv ein gewichtsmittleres Molekulargewicht von 700 g/mol bis 900 g/mol aufweist.

6. Zusammensetzung nach Anspruch 1, bei der das Kohlenwasserstoffpolymeradditiv eine Glasübergangstemperatur im Bereich von 40 bis 50 °C und einen Erweichungspunkt im Bereich von 90 bis 100 °C aufweist.

7. Zusammensetzung nach Anspruch 6, bei der das Kohlenwasserstoffpolymeradditiv
g) innerhalb des Bereichs von 40 bis 90 Gew.-% Komponenten abgeleitet von Piperylen,
h) weniger als oder gleich 40 Gew.-% von Komponenten abgeleitet von Amylen,
i) weniger als oder gleich 15 Gew.-% von Komponenten abgeleitet von Isopren,
j) weniger als oder gleich 20 Gew.-% von Komponenten abgeleitet von Styrol, und
k) weniger als oder gleich 15 Gew.-% von Komponenten abgeleitet von Inden
umfasst, wobei die gesamten Komponenten 100 Gew.-% erreichen.

8. Zusammensetzung nach einem der Ansprüche 1 bis 7, bei der das mindestens eine Elastomer ausgewählt ist aus mindestens einem von Butylkautschuk, halogeniertem Butylkautschuk, verzweigtem ("sternförmig-verzweigtem") Butylkautschuk, halogeniertem sternförmig-verzweigtem Butylkautschuk, Poly(Isobutylen-*co-p*-Methylstyrol), halogeniertem Poly(Isobutylen-*co-p*-Methylstyrol), Mehrzweckkautschuk, Naturkautschuk, Polybutadienkautschuk, Polyisoprenkautschuk, Styrol-Butadien-Kautschuk, Styrol-Isopren-Butadien-Kautschuk, Isopren-Butadien-Kautschuk, Polybutadien mit hohem cis-Anteil, Ethylen-Propylen-Kautschuk, Ethylen-Propylen-Dien-Kautschuk, Nitrilkautschuk, bromiertem Butylkautschuk, chloriertem Butylkautschuk, sternförmig-verzweigtem Polyisobutylenkautschuk und Mischungen davon.

9. Zusammensetzung nach einem der Ansprüche 1 bis 8, bei der das Kohlenwasserstoffpolymeradditiv in einer Menge von 5 bis 50 Massenanteilen pro 100 Massenanteilen (phr) bezogen auf die Elastomerzusammensetzung vorliegt.

10. Zusammensetzung nach einem der Ansprüche 1 bis 9, die ferner eine oder mehrere Füllstoffkomponenten umfasst, die ausgewählt sind aus Calciumcarbonat, Ton, Glimmer, Siliciumdioxid, Silikaten, Talkum, Titandioxid, Stärke und anderen organischen Füllstoffen ausgewählt aus Holzmehl, Ruß und Mischungen davon.

11. Zusammensetzung nach einem der Ansprüche 1 bis 10, bei der die Elastomerzusammensetzung vulkanisiert ist.

12. Zusammensetzung nach einem der Ansprüche 1 bis 11, die im Wesentlichen frei von naphthenischen Ölen und paraffinischen Ölen ist.

13. Zusammensetzung nach einem der Ansprüche 1 bis 12, die im Wesentlichen frei von Weichmachern ist.

14. Luftbarriere, Reifeninnengummi, Innenschlauch oder Schlauch, die die Zusammensetzung nach einem der Ansprüche 1 bis 13 umfassen.

15. Verfahren zum Herstellen einer Elastomerzusammensetzung nach Anspruch 1, bei dem
a) mindestens ein Elastomer und
b) ein Kohlenwasserstoffpolymeradditiv,
wobei das Kohlenwasserstoffpolymeradditiv ausgewählt ist aus mindestens einem von Polymer auf Basis von Dicyclopentadien (DCPD), einem Polymer auf Basis von Cyclopentadien (CPD), einem DCPD-Styrol-Copolymer, einem C₅-Homopolymer- und Copolymer-Harz, einem C₅-Styrol-Copolymer-Harz, einem Terpen-Homopolymer- oder Copolymer-Harz, einem Pinen-Homopolymer- oder Copolymer-Harz, einem C₉-Homopolymer- und Copolymer-Harz, einem C₅/C₉-Copolymer-Harz, einem α-Methylstyrol-Homopolmyer- oder Copolymer-Harz und Kombinationen davon, kombiniert werden, wobei das Kohlenwasserstoffpolymeradditiv eine Glasübergangstemperatur im Bereich von 40 bis 70 °C aufweist und
wobei die Zusammensetzung einen Permeabilitätskoeffizienten bei 40 °C von 1,0 cc*mm/(m²-day)*mmHg oder weniger aufweist.

## Revendications

1. Composition élastomère comprenant :
a) au moins un élastomère ; et
b) un additif polymère hydrocarboné, l'additif polymère hydrocarboné étant choisi à partir d'au moins un élément parmi un polymère à base de dicyclopentadiène (DCPD), un polymère à base de cyclopentadiène (CPD), un copolymère DCPD-styrène, une résine d'homopolymère et copolymère en C₅, une résine de copolymère C₅-styrène, une résine d'homopolymère ou copolymère de terpène, une résine d'homopolymère ou copolymère de pinène, une résine d'homopolymère et copolymère en C₉, une résine de copolymère C₅/C₉, une résine d'homopolymère ou copolymère d'alpha-méthylstyrène, et les combinaisons de ceux-ci ;
l'additif polymère hydrocarboné ayant une température de transition vitreuse dans la gamme de 40 à 70 °C ; et
la composition ayant un coefficient de perméabilité à 40°C de 1,0 cm³*mm/(m²-jour)*mmHg ou moins.

2. Composition de la revendication 1, dans laquelle l'additif polymère hydrocarboné a un poids moléculaire moyen en poids de 700 g/mole à 2500 g/mole.

3. Composition de la revendication 1, dans laquelle l'additif polymère hydrocarboné a une température de transition vitreuse dans la gamme de 50 à 70 °C et/ou un point de ramollissement dans la gamme de 100 à 120 °C.

4. Composition de la revendication 3, dans laquelle l'additif polymère hydrocarboné comprend :
a) une quantité dans la gamme de 60 à 100 % en poids de constituants cycliques ;
b) une quantité inférieure ou égale à 15 % en poids de constituants dérivés du pipérylène ;
c) une quantité inférieure ou égale à 15 % en poids de constituants dérivés de l'amylène ;
d) une quantité inférieure ou égale à 15 % en poids de constituants dérivés de l'isoprène ;
e) une quantité inférieure ou égale à 20 % en poids de constituants dérivés du styrène ; et
f) une quantité inférieure ou égale à 20 % en poids de constituants dérivés de l'indène ;
le total des constituants faisant 100 % en poids.

5. Composition de l'une quelconque des revendications 3 et 4, dans laquelle l'additif polymère hydrocarboné a un poids moléculaire moyen en poids de 700 g/mole à 900 g/mole.

6. Composition de la revendication 1, dans laquelle l'additif polymère hydrocarboné a une température de transition vitreuse dans la gamme de 40 à 50 °C et un point de ramollissement dans la gamme de 90 à 100 °C.

7. Composition de la revendication 6, dans laquelle l'additif polymère hydrocarboné comprend :
g) une quantité dans la gamme de 40 à 90 % en poids de constituants dérivés du pipérylène ;
h) une quantité inférieure ou égale à 40 % en poids de constituants dérivés de l'amylène ;
i) une quantité inférieure ou égale à 15 % en poids de constituants dérivés de l'isoprène ;
j) une quantité inférieure ou égale à 20 % en poids de constituants dérivés du styrène ; et
k) une quantité inférieure ou égale à 15 % en poids de constituants dérivés de l'indène ;
le total des constituants faisant 100 % en poids.

8. Composition selon l'une quelconque des revendications 1 à 7, dans laquelle l'au moins un élastomère est choisi à partir d'au moins un élément parmi le caoutchouc butyle, le caoutchouc butyle halogéné, le caoutchouc butyle ramifié (« ramifié en étoile »), le caoutchouc butyle halogéné ramifié en étoile, le poly(isobutylène-*co-p*-méthylstyrène), le poly(isobutylène-*co-p-*méthylstyrène) halogéné, le caoutchouc normal, le caoutchouc naturel, le caoutchouc de polybutadiène, le caoutchouc de polyisoprène, le caoutchouc styrène-butadiène, le caoutchouc styrène-isoprène-butadiène, le caoutchouc isoprène-butadiène, le polybutadiène fortement cis, le caoutchouc éthylène-propylène, le caoutchouc éthylène-propylène-diène, le caoutchouc nitrile, le caoutchouc butyle bromé, le caoutchouc butyle chloré, le caoutchouc de polyisobutylène ramifié en étoile, et les mélanges de ceux-ci.

9. Composition selon l'une quelconque des revendications 1 à 8, dans laquelle l'additif polymère hydrocarboné est présent à 5 à 50 pcc, rapporté à la composition élastomère.

10. Composition selon l'une quelconque des revendications 1 à 9, comprenant en outre un ou plusieurs constituants de charge choisis parmi le carbonate de calcium, l'argile, le mica, la silice, les silicates, le talc, le dioxyde de titane, l'amidon et les autres charges organiques choisies parmi la farine de bois, le noir de carbone, et les mélanges de ceux-ci.

11. Composition selon l'une quelconque des revendications 1 à 10, la composition élastomère étant durcie.

12. Composition selon l'une quelconque des revendications 1 à 11, la composition étant sensiblement exempte d'huiles naphténiques et d'huiles paraffiniques.

13. Composition selon l'une quelconque des revendications 1 à 12, la composition étant sensiblement exempte d'un plastifiant.

14. Barrière à l'air, gomme intérieure de pneu, chambre à air, ou tuyau souple comprenant la composition selon l'une quelconque des revendications 1 à 13.

15. Procédé de préparation d'une composition élastomère selon la revendication 1, comprenant la combinaison
a) d'au moins un élastomère ; et
b) d'un additif polymère hydrocarboné, l'additif polymère hydrocarboné étant choisi à partir d'au moins un élément parmi un polymère à base de dicyclopentadiène (DCPD), un polymère à base de cyclopentadiène (CPD), un copolymère DCPD-styrène, une résine d'homopolymère et copolymère en C₅, une résine de copolymère C₅-styrène, une résine d'homopolymère ou copolymère de terpène, une résine d'homopolymère ou copolymère de pinène, une résine d'homopolymère et copolymère en C₉, une résine de copolymère C₅/C₉, une résine d'homopolymère ou copolymère d'alpha-méthylstyrène, et les combinaisons de ceux-ci ;
l'additif polymère hydrocarboné ayant une température de transition vitreuse dans la gamme de 40 à 70 °C ; et
la composition ayant un coefficient de perméabilité à 40 °C de 1,0 mc³*mm/(m²-jour)*mmHg ou moins.
